# EUROPÄISCHE PATENTANMELDUNG

(11) **EP 3 745 093 A1**
(43) Veröffentlichungstag der Anmeldung: **02.12.2020**
(21) Anmeldenummer: 19176967.8
(22) Anmeldetag: 28.05.2019
(51) Int. Cl.: G01D 11/30, G01B 1/00

(54) **STÜTZGLIED FÜR EINE PRÄZISIONSVORRICHTUNG, STÜTZGERÜST FÜR EINE PRÄZISIONSVORRICHTUNG, SOWIE PRÄZISIONSVORRICHTUNG MIT EINEM SOLCHEN STÜTZGLIED ODER STÜTZGERÜST**

(71) Anmelder: ETEL S.A., 2112 Môtiers (CH)
(72) Erfinder: García-Herreros, Iván, 2123 St. Sulpice (CH); Kobel, Philipp, 2560 Nidau (CH)
(74) Vertreter: Maikowski & Ninnemann Patentanwälte Partnerschaft mbB

(57) **Zusammenfassung**

Vorgeschlagen wird ein Stützglied (1) für eine Präzisionsvorrichtung (2), umfassend
- ein Vertikalstützelement (11), das sich entlang einer vertikalen Haupterstreckungsrichtung (Z) erstreckt, wobei das Vertikalstützelement (11) ein Material mit geringem Wärmeausdehnungskoeffizienten umfasst; und
- ein Horizontalstützelement (12), das wenigstens einen Abschnitt des Vertikalstützelements (11) horizontal umgibt und das ausgebildet ist, das Vertikalstützelement (11) horizontal gegen ein Verkippen aus der Haupterstreckungsrichtung (Z) abzustützen, wobei das Horizontalstützelement (12) einen thermisch isolierenden Innenraum (R) begrenzt, in dem das Vertikalstützelement (11) teilweise aufgenommen ist.

## Beschreibung

Diese Schrift betrifft Ausführungsformen eines Stützglieds für eine Präzisionsvorrichtung, Ausführungsformen eines Stützgerüsts für eine Präzisionsvorrichtung sowie Ausführungsformen einer Präzisionsvorrichtung mit einem solchen Stützglied oder mit einem solchen Stützgerüst.

Ein derartiges Stützglied bzw. Stützgerüst kann beispielsweise bei einer Präzisionsvorrichtung wie bei einem optischen Tisch, einem metrologischen Rahmen oder einem Präzisionsarbeitstisch (etwa mit einer darauf angeordneten präzisen Positioniereinrichtung) zum Einsatz kommen.

Beim Design solcher hochpräzisen und zugleich hochstabilen Strukturen muss der Ingenieur zwei augenscheinlich gegensätzliche Ziele verfolgen. Er muss nämlich zum einen eine steife, aber leichte Struktur schaffen (insbesondere um eine Degradation der Struktur oder eine Verzögerung von kurzfristigen Operationen an einem Werkstück oder an einer Probe in Folge von Vibrationen der Struktur zu verhindern) und zum anderen eine langfristige thermische Stabilität der Vorrichtung sicherstellen, um z. B. einen zuverlässigen und reproduzierbaren Mess- oder Bearbeitungsprozess zu ermöglichen. Das erste Ziel erfordert, wie erwähnt, generell eine leichte, steife Struktur, um Oszillationen zu minimieren. Das zweite Ziel hingegen erfordert generell eine massive Struktur (für eine große thermische Trägheit) mit einer Geometrie, die eine möglichst geringe Wärmeaustauschfläche mit sich bringt, um hinsichtlich der thermischen Anforderungen Stabilität zu garantieren.

Der negative Einfluss der thermischen Ausdehnung auf Präzisionssysteme ist an sich seit langem bekannt. Dies hat z. B. zur der Erfindung von Uhren mit einem Temperaturkompensationspendel (Englisch: "Gridiron pendulum") und zu der Entwicklung von Materialien mit geringem Wärmeausdehnungskoeffizienten (im Folgenden auch kurz WAK), wie z. B. sogenannten Invar-Legierungen, geführt.

Bei präzisen Positionierungsanwendungen bringt die thermische Ausdehnung der verwendeten Strukturen z. B. signifikante Beschränkungen hinsichtlich der erreichbaren Genauigkeit mit sich.

Ein bekannter Lösungsansatz besteht generell darin, Materialien mit geringem WAK zu verwenden, um eine geometrische Stabilität sicherzustellen, und durch eine Kombination verschiedener Materialien und geometrischer Eigenschaften einen Kompromiss zwischen den beiden vorgenannten Zielsetzungen zu erreichen.

Dieser Ansatz ist jedoch generell mit dem Nachteil verbunden, dass die Herstellung einer solchen Struktur vergleichsweise aufwendig und kostenintensiv ist. Zudem unterliegen derartige Strukturen am Ende immer noch gewissen thermischen Variationen durch Umwelteinflüsse.

In der DE 8 43 286 C1 ist ein Profilmessgerät vorgeschlagen, bei welchem Stützen eines Messtasters aus sogenanntem Invar-Stahl gefertigt sind.

Aufgabe der vorliegenden Erfindung ist es, ein Stützglied für eine Präzisionsvorrichtung vorzuschlagen, welches im Hinblick auf die Anforderungen der mechanischen Steifigkeit und thermischen Stabilität gute Eigenschaften aufweist und zugleich eine einfache Fertigung, Montage und Skalierbarkeit erlaubt.

Aufgabe der vorliegenden Erfindung ist weiter, ein entsprechendes Stützgerüst für eine Präzisionsvorrichtung sowie eine Präzisionsvorrichtung mit einem solchen Stützglied oder einem solchen Stützgerüst vorzuschlagen.

Hiervon ausgehend werden die Gegenstände der unabhängigen Ansprüche vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist.

Gemäß einem ersten Aspekt wird ein Stützglied für eine Präzisionsvorrichtung vorgeschlagen, welches ein Vertikalstützelement umfasst, wobei sich das Vertikalstützelement entlang einer vertikalen Haupterstreckungsrichtung erstreckt. Das Vertikalstützelement umfasst ein Material mit einem geringen Wärmeausdehnungskoeffizienten (und kann insbesondere aus einem solchen Material bestehen). Das Stützglied umfasst ferner ein Horizontalstützelement, das wenigstens einen Abschnitt des Vertikalstützelements horizontal umgibt und das ausgebildet ist, das Vertikalstützelement horizontal gegen ein Verkippen aus der Haupterstreckungsrichtung abzustützen (d. h. ein Verkippen aus der Haupterstreckungsrichtung zu verhindern). Unter einem Verkippen sollen im Rahmen der vorliegenden Beschreibung ein translatorisches Ausweichen wenigstens eines Abschnitts des Vertikalstützelements in horizontaler Richtung und/oder eine Rotation wenigstens eines Abschnitts des Vertikalstützelements um eine horizontale Richtung verstanden werden. Das Horizontalstützelement ist also ausgebildet, sowohl horizontal gerichteten Kräften als auch Drehmomenten entgegenzuwirken. Das Horizontalstützelement definiert einen thermisch isolierenden Innenraum, in dem das Vertikalstützelement teilweise aufgenommen ist. Mit anderen Worten stellt der Innenraum des Horizontalstützelements eine thermische Isolierung für wenigstens einen Abschnitt des Vertikalstützelements bereit.

Gemäß einem zweiten Aspekt umfasst ein Stützgerüst für eine Präzisionsvorrichtung mehrere miteinander verbundener Stützglieder gemäß dem ersten Aspekt, wobei die Vertikalstützelemente der mehreren Stützglieder unterschiedliche Haupterstreckungsrichtungen haben.

Ein dritter Aspekt sieht vor, dass eine Präzisionsvorrichtung in Form einer optischen Platte, eines metrologischen Rahmens und/oder einer Präzisionsarbeitsplatte wenigstens ein Stützglied gemäß dem ersten Aspekt oder ein Stützgerüst gemäß dem zweiten Aspekt umfasst.

Nachstehend wird auf alle vorstehend genannten Aspekte Bezug genommen werden.

Das Vertikalstützelement kann in Form eines (z. B. kreiszylindrischen) Stabes ausgebildet sein. Es erfüllt die Funktion, eine thermische Stabilität des Stützglieds gegenüber thermischen Variationen, insbesondere bezüglich der Haupterstreckungsrichtung, sicherzustellen. So kann das Stützglied mittels des Vertikalstützelements etwa einen Abschnitt einer Präzisionsvorrichtung oder aber auch ein weiteres derartiges Stützglied bezüglich der vertikalen Haupterstreckungsrichtung abstützen, ohne dass es bei Temperaturänderungen zu nennenswerten Verschiebungen oder Verspannungen der Präzisionsvorrichtung kommt.

Dabei soll verstanden werden, dass die hier als "vertikal" bezeichnete Haupterstreckungsrichtung lediglich mit Bezug auf das Stützglied eine (lokal) "vertikale" Richtung definieren soll, die auf einer in diesem Sinne (lokal) "horizontalen" Ebene senkrecht steht; es ist damit nicht etwa gemeint, dass sich das Vertikalstützelement entlang einer in einem globaleren Sinne vertikalen Richtung (wie etwa eine Vertikale bezüglich der übergeordneten Präzisionsvorrichtung oder eine Vertikale, die durch eine Wirkrichtung der Schwerkraft vorgegeben ist), erstrecken muss.

Nach einer Ausführungsform umfasst das Vertikalstützelement eine Invar-Legierung bzw. besteht aus einer Invar-Legierung. Invar-Legierungen sind spezielle Eisen-Nickel-Legierungen (ggf. mit zusätzlich legierten Anteilen von Magnesium, Silicium, Kohlenstoff und/oder Cobalt), wie z. B. FE65NI35-Invar, welches einen äußerst geringen WAK aufweist. Alternativ oder zusätzlich zu Invar kann das Vertikalstützelement auch andere Materialien mit einem geringen WAK, wie z. B. Kovar, Zerodur oder andere industrielle Keramiken umfassen.

Gemäß einer Ausführungsform ist ein linearer WAK des Vertikalstützelements um wenigstens einen Faktor 2 kleiner als ein linearer WAK des Horizontalstützelements. Beispielsweise kann der lineare WAK des Vertikalstützelements bei einer Umgebungstemperatur von 20°C kleiner oder gleich 2,0 ·10⁻⁶ K⁻¹ sein.

Das Horizontalstützelement sorgt für eine hinreichende Steifigkeit des Stützglieds und damit auch einer Präzisionsvorrichtung, welches das Stützglied umfasst. Insbesondere erhöht das Horizontalstützelement eine Steifigkeit bezüglich Krafteinwirkungen in einer horizontalen Ebene, die sich senkrecht zu der vertikalen Haupterstreckungsrichtung erstreckt.

Dies wird insbesondere dadurch bewerkstelligt, dass ein Ausweichen des Vertikalstützelements aus der Haupterstreckungsrichtung durch das Horizontalstützelement, welches wenigstens ein Abschnitt des Vertikalstützelements horizontal umgibt, verhindert wird. Beispielsweise kann das Horizontalstützelement zu diesem Zweck derart ausgebildet und angeordnet sein, dass es jenen Abschnitt des Vertikalstützelements vollumfänglich (um die Haupterstreckungsrichtung herum) umgibt.

Nach einer beispielhaften Ausführungsform umfasst das Horizontalstützelement wenigsten eines der Materialien Stahl und Aluminium. Insbesondere kann das Horizontalstützelement aus einem oder mehreren der vorgenannten Materialien bestehen. Die Verwendung der genannten Materialien kann die benötigte Steifigkeit bezüglich horizontaler Krafteinwirkung ermöglichen.

Beispielsweise können ein oder mehrere extrudierte Standardprofile aus den vorgenannten Materialien zum Einsatz kommen. Dabei kann das Horizontalstützelement derart ausgeformt sein, dass sich eine Wandstärke des Horizontalstützelements nach oben hin verjüngt, d. h., dass es in einem oberen Bereich (bezogen auf die vertikale Haupterstreckungsrichtung) eine vergleichsweise dünne Wandstärke aufweist.

Vorzugsweise ist das Horizontalstützelement ferner in der Weise ausgebildet und angeordnet, dass es zwar, wie beschrieben, eine Steifigkeit bezüglich der horizontalen Ebene sicherstellt, jedoch dabei eine vertikale Relativbewegung eines Abschnitts des Vertikalstützelements gegenüber dem Horizontalstützelement (etwa in Folge von Wärmeausdehnung oder -kontraktion des Horizontalstützelements und/oder des Vertikalstützelements) allenfalls sehr geringfügig behindert.

Daher ist bei einer Ausführungsform das Horizontalstützelement so ausgebildet und angeordnet, dass es einer Längenausdehnung oder -kontraktion des Horizontalstützelements und/oder des Vertikalstützelements entlang der Haupterstreckungsrichtung allenfalls einen geringen Reibungswiderstand entgegensetzt. Hierdurch kann vermieden werden, dass durch Reibungseffekte Verschlechterungen der Performance der Präzisionsvorrichtung auftreten.

Bei einer Ausführungsform umfasst das Horizontalstützelement einen Lagerabschnitt zum horizontalen Abstützen des vertikalen Elements. Dabei weist der Lagerabschnitt z. B. ein Durchgangsloch auf, durch das sich das Vertikalstützelement hindurch erstreckt.

Es kann gemäß einer Variante auch vorgesehen sein, dass der Lagerabschnitt ein Luftlager, insbesondere ein poröses Luftlager, für das Vertikalstützelement ausbildet. Als mögliche Alternative zu einem Luftlager kann aber auch z. B. ein Gleitlager mit einer geringen Reibung (wie z. B. ein selbstschmierendes Gleitlager), ein Kugellager, ein elektromagnetisches Lager oder ein Blattfederlager vorgesehen sein.

Durch ein derartiges Lager könnten eine Längenausdehnung bzw. -kontraktion des Vertikalstützelements einerseits und des Horizontalstützelements andererseits entkoppelt werden. Das Vertikalstützelement wird dadurch nur geringen vertikalen Kräften ausgesetzt.

Bei einer weiteren Variante ist zwischen dem Vertikalstützelement und dem Horizontalstützelement eine Blattfeder (z. B. eine Ring-Blattfeder) angeordnet, wobei die Blattfeder bevorzugt so ausgebildet ist, dass sie in horizontaler Richtung (d.h. in radialer Richtung bezüglich der Haupterstreckungsrichtung) vergleichsweise starr ist und in vertikaler Richtung (d.h. in der Haupterstreckungsrichtung) vergleichsweise nachgiebig ist.

Die vorstehend beschriebenen Ausführungsvarianten des Lagerabschnitts ermöglichen somit ein wirksames Abstützen des Vertikalstützelements gegen ein Verkippen aus der Vertikalen, ohne jedoch einer linearen Ausdehnungsbewegung des Vertikalstützelements entlang der Vertikalen einen hinderlichen Reibungswiderstand entgegenzusetzen.

In einer Variante kann der Lagerabschnitt ein fluiddichtes (insbesondere luftdichtes) Lager für das Vertikalstützelement bereitstellen. Die kann z. B. durch eine an dem Lagerabschnitt angeordnete (oder den Lagerabschnitt selbst ausbildende) Ring-Blattfeder bewerkstelligt werden. Wie weiter unten näher erläutert wird, kann durch das Vorsehen eines derartigen fluiddichten Lagers ein besonders gut thermisch isolierender Innenraum geschaffen werden, in welchem ein Teil des Vertikalstützelements angeordnet ist.

Gemäß einer bevorzugten Ausführungsform ist das Horizontalstützelement achsensymmetrisch bezüglich der Haupterstreckungsrichtung ausgebildet. Insbesondere kann das Horizontalstützelement rotationssymmetrisch bezüglich der Haupterstreckungsrichtung ausgebildet sein. So kann das Horizontalstützelement beispielsweise zylinderförmig, wie etwa kreiszylinderförmig, sein.

Dabei weist das Horizontalstützelement gemäß einer Ausführungsform einen Mantelabschnitt (entsprechend einem Zylindermantel) sowie einen Deckelabschnitt (entsprechend einem Zylinderdeckel) auf, wobei Deckelabschnitt einen Lagerabschnitt der vorstehend beschriebenen Art umfasst oder einen solchen ausbildet. Insgesamt weist das Stützglied gemäß jener beispielhaften Ausführungsform somit eine Struktur auf, die an einen Zylinderkolben erinnert.

Zusätzlich zu dem Bereitstellen einer horizontalen Steifigkeit erfüllt das Horizontalstützelement eine weitere Funktion, die darin besteht, das Vertikalstützelement gegen thermische Variationen (d. h. Schwankungen einer Umgebungstemperatur) abzuschirmen. Dies wird dadurch ermöglicht, dass das Horizontalstützelement wenigstens einen Abschnitt des Vertikalstützelements umgibt und einen thermisch isolierenden Innenraum definiert, in dem das Vertikalstützelement teilweise aufgenommen ist.

Dabei muss die thermische Isolation selbstverständlich nicht perfekt sein. Grundsätzlich reicht es aus, eine messbare Abschirmung jenes in dem Innenraum aufgenommenen Teils des Vertikalstützelements gegenüber Schwankungen der Umgebungstemperatur. So kann eine (aufgrund des geringen WAK des Vertikalstützelements ggf. ohnehin schon kleine) Wärmeausdehnung bzw. -kontraktion des Vertikalstützelements, insbesondere entlang der Haupterstreckungsrichtung, noch weiter vermindert werden.

Beispielsweise kann der Innenraum mit einem Dämmmaterial ausgekleidet sein, um die Isolierwirkung zu erhöhen. Alternativ oder zusätzlich kann eine Vakuumdämmung oder eine Dämmung durch einen Luftspalt (d. h. dass der Innenraum mit Luft gefüllt ist) vorgesehen sein.

Der Innenraum kann gemäß einer bevorzugten Ausführungsform fluiddicht, wie z. B. luftdicht, abgeschlossen sein. Durch die Aufnahme eines Teils des Vertikalstützelements in einen fluiddichten Innenraum ist es möglich, diesen Teil des Vertikalstützelements besonders gut gegen Temperatureinflüsse der Umgebung (d. h. im Außenraum) abzuschirmen. Beispielsweise kann im dem fluiddichten Innenraum ein Vakuum herrschen, wodurch jener Teil des Vertikalstützelements ähnlich wie in einer Thermoskanne thermisch isoliert ist.

Um einen fluiddichten Innenraum zu schaffen, kann z. B., wie oben bereits erwähnt, an dem Horizontalstützelement ein Lagerabschnitt vorgesehen sein, der ein fluiddichtes Lager für das Vertikalstützelement umfasst oder ausbildet. Ein solches Lager kann beispielsweise in Form einer Ring-Blattfeder bereitgestellt werden.

Bei einer Ausführungsvariante weist das Stützglied, und zwar insbesondere das einen Innenraum ausbildende Horizontalstützelement des Stützglieds, einen Anschluss für ein Temperaturregelungssystem zum Regeln einer Temperatur in dem Innenraum auf. Dies ermöglicht z. B. eine temperaturgeregelte Ventilation des Innenraums, wodurch der Innenraum etwa stets im Wesentlichen auf einer konstanten Temperatur gehalten werden kann. Auch dies trägt zu einer weiteren Verminderung einer linearen Wärmeausdehnung bzw. -kontraktion des Vertikalstützelements bei.

Entsprechend dem Vorstehenden sind mit der vorgeschlagenen Lösung u. a. die Vorteile verbunden, dass eine geometrische Stabilität einer Stützstruktur gegenüber Schwankungen der Umgebungstemperatur sichergestellt werden kann und dass zugleich eine Steifigkeit bezüglich vertikaler Krafteinwirkung (das Vertikalstützelement an sich bringt bereits eine Zug- und Kompressionssteifigkeit mit sich) sowie auch gegenüber horizontaler Krafteinwirkung (durch das Horizontalstützelement) gewährleistet werden kann.

Darüber hinaus erlaubt die Erfindung eine einfache Montage von hochpräzisen und hochstabilen Vorrichtungen (wie z. B. optischen Tischen oder metrologischen Rahmen bzw. Stützgerüsten für solche Anwendungen) in modularer Weise, d. h. unter Verwendung von mehreren standardisierten Stützgliedern, die in flexibler, für die jeweilige Anwendung angepasster Weise miteinander verbunden werden können. Dadurch können die Design-Zyklen für derartige Präzisionsvorrichtungen verkürzt und Kosten eingespart werden.

Weitere Ausgestaltungen und Vorteile der Erfindung werden bei der nachfolgenden Beschreibung einiger Ausführungsbeispiele anhand der Figuren deutlich werden.

Es zeigen:
- Fig. 1A: exemplarisch und schematisch eine perspektivische Ansicht eines Stützglieds gemäß einer oder mehreren Ausführungsformen;
- Fig. 1B: exemplarisch und schematisch eine Querschnittsansicht des Stützglieds aus Fig. 1A;
- Fig. 1C: exemplarisch und schematisch eine weitere Querschnittsansicht des Stützglieds aus Fig. 1A und 1B;
- Fig. 2: exemplarisch und schematisch einen Ausschnitt einer perspektivischen Ansicht eines Stützgerüsts gemäß einer oder mehreren Ausführungsformen; und
- Fig. 3: exemplarisch und schematisch einen Ausschnitt einer perspektivischen Ansicht einer Präzisionsvorrichtung gemäß einer oder mehreren Ausführungsformen.

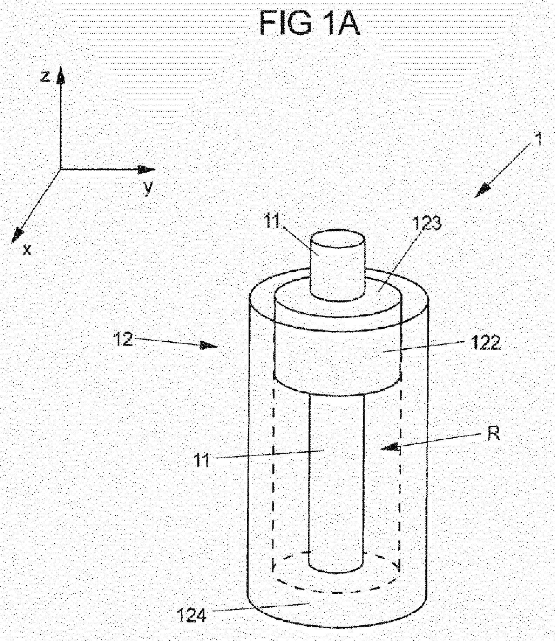

Fig. 1A zeigt exemplarisch und schematisch eine perspektivische Ansicht eines Stützglieds 1 gemäß einer beispielhaften Ausführungsform. Das Stützglied 1 umfasst ein Vertikalstützelement 11, welches sich entlang einer vertikalen Haupterstreckungsrichtung Z erstreckt.

Das Vertikalstützelement 11 ist vorliegend in Form eines kreiszylindrischen Stabes realisiert. Dabei besteht das Vertikalstützelement 11 aus einem Material mit einem geringen Wärmeausdehnungskoeffizienten (WAK), wie z. B. aus einer sogenannten Invar-Legierung. So kann beispielsweise vorgesehen sein, dass das Vertikalstützelement 11 einen WAK hat, welcher bei einer Umgebungstemperatur von 20°C kleiner oder gleich 2,0·10⁻⁶ K⁻¹ ist. Bei der gezeigten Stützstruktur 1 übernimmt das Vertikalstützelement 11 eine Stützfunktion bezüglich der Haupterstreckungsrichtung Z sowohl hinsichtlich Kompression als auch hinsichtlich Zugkräften.

Um jedoch insgesamt eine gute Steifigkeit des Stützglieds 1 zu erzielen, umfasst das Stützglied 1 ferner ein Horizontalstützelement 12. Gemäß der veranschaulichten beispielhaften Ausführungsform hat das Horizontalstützelement 12 eine hohlzylindrische Grundform, mit einem kreisförmigen Bodenabschnitt 124, einem Mantelabschnitt ein 122 sowie einem Lagerabschnitt 123. Der Mantelabschnitt 122 ist aus Gründen der besseren Darstellbarkeit der übrigen Elemente des Stützglieds transparent gezeichnet; in realen Ausführungsformen muss der Mantelabschnitt 122 des Horizontalstützelements hingegen selbstverständlich nicht transparent sein.

Der Lagerabschnitt 123 ist nach Art eines Pfropfens in einem oberen Bereich in einen seitlich vom Mantelabschnitt 122 eingeschlossenen Hohlraum eingeführt und schließt dadurch einen in dem Horizontalstützelement 12 ausgebildeten Innenraum R nach oben hin ab. Durch ein Durchgangsloch des Lagerabschnitts 123 hindurch erstreckt sich das Vertikalstützelement 11 in den Innenraum R hinein. Dabei stützt sich das Vertikalstützelement 11 nach unten hin auf dem Bodenabschnitt 124 des Horizontalstützelements 12 ab.

Das Horizontalstützelement 12 ist bei dem gezeigten Ausführungsbeispiel demnach achsensymmetrisch, nämlich speziell rotationssymmetrisch bezüglich der Haupterstreckungsrichtung Z, ausgebildet. In anderen Ausführungsbeispielen kann das Horizontalstützelement in einem horizontalen Querschnitt viereckig, wie z. B. rechteckig oder quadratisch, ausgeformt sein. Beispielsweise kann das Horizontalstützelement wenigstens teilweise als extrudiertes Profil gefertigt sein.

Das Horizontalstützelement 12 umfasst beispielsweise Stahl und/oder Aluminium und kann insbesondere aus einem oder mehreren der vorgenannten Materialien gefertigt sein. Durch Verwendung der genannten Materialien für das Horizontalstützelement 12 kann die benötigte Steifigkeit bezüglich horizontaler Krafteinwirkung bzw. Verspannung erzielt werden.

Mittels des Lagerabschnitts 123 kann das Horizontalstützelement 12 das Vertikalstützelement 11 horizontal gegen ein Verkippen aus der Haupterstreckungsrichtung Z (etwa unter mechanischer Belastung des Stützglieds 1) abstützen.

Es kann gemäß einer Variante auch vorgesehen sein, dass der Lagerabschnitt 123 ein Luftlager, insbesondere ein poröses Luftlager, für das Vertikalstützelement 11 ausbildet (in den Figuren nicht gesondert dargestellt). Als mögliche Alternative zu einem Luftlager kann aber auch ein Gleitlager mit einer geringen Reibung vorgesehen sein.

Zwischen dem Vertikalstützelement 11 und dem Lagerabschnitt 123 kann gemäß einer Variante auch eine (in den Figuren nicht illustrierte) Blattfeder angeordnet sein, wobei die Blattfeder so ausgebildet ist, dass sie in horizontaler Richtung X-Y (d.h. in radialer Richtung bezüglich der Haupterstreckungsrichtung Z) vergleichsweise starr ist und in vertikaler Richtung (d.h. in der Haupterstreckungsrichtung Z) vergleichsweise nachgiebig ist. Es kann auch ein Lager aus zwei parallelen Blattfedern vorgesehen sein, welches Drehmomente (bezüglich Drehungen um beide horizontalen Richtungen X und Y) aufnehmen kann.

Die vorstehend genannten Ausführungsvarianten ermöglichen ein wirksames Abstützen des Vertikalstützelements 11 gegen ein Verkippen aus der Vertikalen Z, ohne jedoch einer linearen Ausdehnungsbewegung des Vertikalstützelements 11 entlang der Vertikalen Z einen hinderlichen Reibungswiderstand entgegenzusetzen.

Zusätzlich zu dem Bereitstellen einer horizontalen Steifigkeit erfüllt das Horizontalstützelement 12 bei dem gezeigten Ausführungsbeispiel die Funktion, den in dem Innenraum R aufgenommenen Abschnitt des Vertikalstützelements 11 gegen Schwankungen einer Umgebungstemperatur abzuschirmen. Der Abschirmeffekt kann z. B. dadurch verstärkt werden, dass der Innenraum R mit einem Wärmeisolationsmaterial ausgekleidet wird.

Dabei kann der Innenraum R z. B. durch den Bodenabschnitt 124, den Mantelabschnitt 122 und den Lagerabschnitt 123 als Deckelabschnitt weitgehend luftdicht abgeschlossen sein. Durch die abschnittweise Aufnahme des Vertikalstützelements 11 in jenem (zumindest weitgehend) luftdichten Innenraum R ist es somit möglich, das Vertikalstützelement 11 gegen Temperaturschwankungen in der Umgebung (d.h. im Außenraum) des Stützglieds 1 abzuschirmen. So kann eine Wärmeausdehnung bzw. -kontraktion des Vertikalstützelements 11, insbesondere entlang der Haupterstreckungsrichtung Z, noch weiter vermindert werden. Ein luft- bzw. fluiddichter Innenraum R ermöglicht ferner weitere Optionen, wie z. B. eine Vakuumisolation oder eine aktive Temperaturregelung, etwa unter Verwendung einer Kühlflüssigkeit.

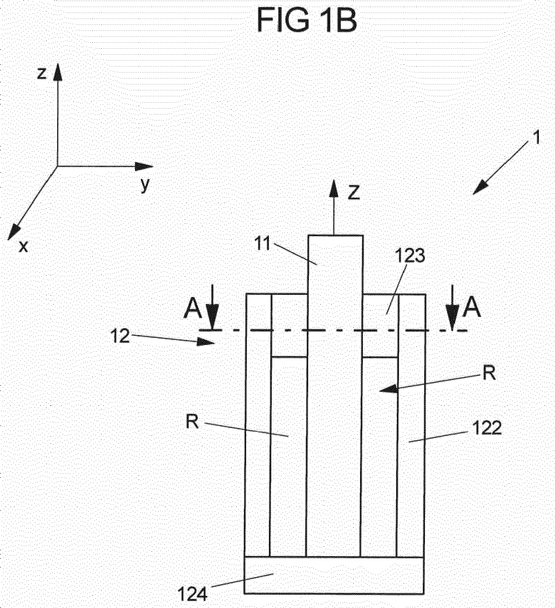

Fig. 1B zeigt einen Querschnitt entlang der Haupterstreckungsrichtung Z durch das Stützglied zur 1 aus Fig. 1A. Dabei ist gut erkennbar, dass sich das Vertikalstützelement 11 in Form des Invar-Stabes 11 durch den Lagerabschnitt 123 hindurch erstreckt und sich in horizontaler Richtung gegen dieses abstützt. Abweichend von der Darstellung in Fig. 1B muss das Vertikalstützelement 11 den Lagerabschnitt 123 nicht zwingend traversieren; es kann sich z. B. auch lediglich in den Lagerabschnitt 123 hinein erstrecken.

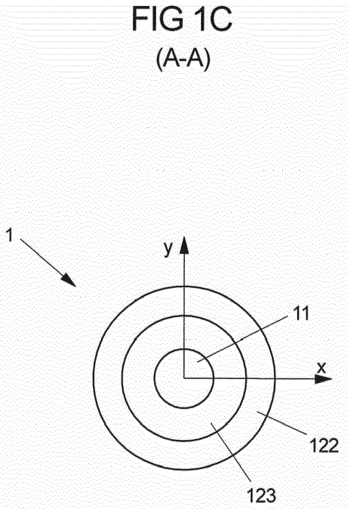

Fig. 1C zeigt eine andere Querschnittsansicht des Stützglieds 1 gemäß den Figuren 1A-B, wobei die Querschnittsebene X-Y-Ebene ist. Bezüglich der vertikalen Haupterstreckungsrichtung Z liegt der gezeigte Querschnitt auf der Höhe des Anlageabschnitts 123. Die Markierung A-A in Fig. 1B, markiert den in Fig. 1C dargestellten Querschnitt. Die Fig. 1C veranschaulich die rotationssymmetrische Struktur, die das Stützglieds 1 gemäß der vorliegenden Ausführungsform aufweist.

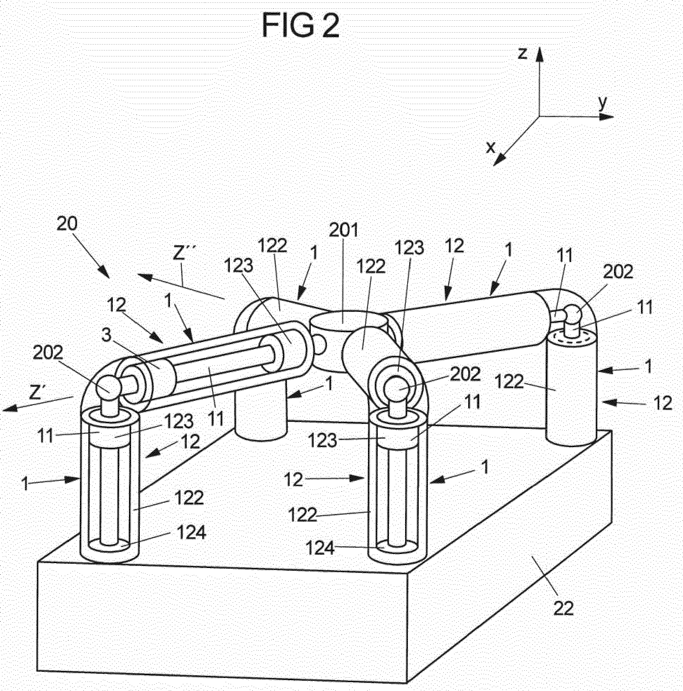

Fig. 2 zeigt schematisch und exemplarisch eine Ausfiihrungsform einer Stützgerüsts 20, welches mehrere Stützglieder 1 der vorstehend beschriebenen Art umfasst. Dabei ist auf einer horizontalen Oberfläche eines quaderförmigen Sockels 22 an jeder von vier Ecken ein Stützglied 1 entsprechend der zuvor mit Bezug auf die Fig. 1A-C beschriebenen Ausfiihrungsform angeordnet (dabei sind selbstverständlich auch andere Ausführungsvarianten mit lediglich drei Ecken denkbar). Alle vier in den Ecken angeordneten Stützglieder 1 sind derart ausgerichtet, dass sich ihr jeweiliges Vertikalstützelement 11 im Wesentlichen entlang einer gemeinsamen vertikalen Haupterstreckungsrichtung Z erstrecken.

Die Horizontalstützelemente 12 jener vier Stützglieder 1 bilden - über die jeweiligen Bodenabschnitte 124 - eine mechanische Schnittstelle zwischen den Vertikalstützelementen 11 und dem Sockel 22, welcher z. B. aus Granit bestehen kann.

Ferner sind bei diesem Ausfiihrungsbeispiel vier weitere Stützglieder 1 vorgesehen, welche die Funktion von horizontalen Querstreben erfüllen. Jene weiteren Stützglieder 1 unterscheiden sich insofern von dem Ausführungsbeispiel, das vorstehend mit Bezug auf die Fig. 1A-C beschrieben wurde, als dass sie jeweils an beiden Enden ein Lagerelement 123 der vorstehend beschriebenen Art aufweisen, durch welches sich jeweils ein Ende des Vertikalstützelements 11 aus dem Innenraum R des Stützglieds 1 hinaus erstreckt.

Dabei ist im Rahmen des dargestellten Stützgerüsts 20 jeweils ein Ende der Stützelemente 11 der als Querstreben fungierenden Stützglieder 1 mit einem oberen Ende eines Vertikalstützelements 11 der in den Ecken des Sockels 22 angeordneten Stützglieder zur 1 verbunden. Das jeweilige andere Ende der Vertikalstützelemente 11 der als Querstreben fungierenden Stützglieder 1 ist mit einem Zentralteil 201 des Stützgerüsts 20 verbunden. Dabei erstrecken sich die Stützelemente 11 der als Querstreben fungierenden Stützglieder 1 im Raum in unterschiedliche vertikale Haupterstreckungsrichtungen Z', Z" innerhalb der (global) horizontalen Ebene X-Y.

Wie dem Prinzip nach bereits mit Bezug auf die Fig. 2 beschrieben wurde, sind die jeweiligen Vertikalstützelemente 11 der einzelnen Stützglieder 1 miteinander (bzw. vorliegend mit äußeren Stützzylindern 204, die eine mechanische Schnittstelle zu dem Sockel 22 bilden) verbunden. Die (nicht gezeigten) Vertikalstützelemente der Stützglieder 1 bestimmten primär die Statik des Stützgerüsts 20, wobei die jeweiligen Horizontalstützelemente der Stützstruktur 20 zusätzliche Steifigkeit verleihen.

Wo die Enden zweier Vertikalstützelemente 11 verschiedener Stützglieder 1 miteinander verbunden sind, ist dies jeweils mittels eines Verbindungselements 202 bewerkstelligt. Die Verbindungselemente 202 sind dabei bevorzugt so ausgebildet, dass sie unerwünschte Bewegungsfreiheitsgrade blockieren und erwünschte Bewegungsfreiheitsgerade zulassen bzw. letzteren nur einen geringen Widerstand entgegensetzen, ähnlich wie dies vorstehend mit Bezug auf die Lagerabschnitt 123 der Stützglieder 1 beschrieben wurde.

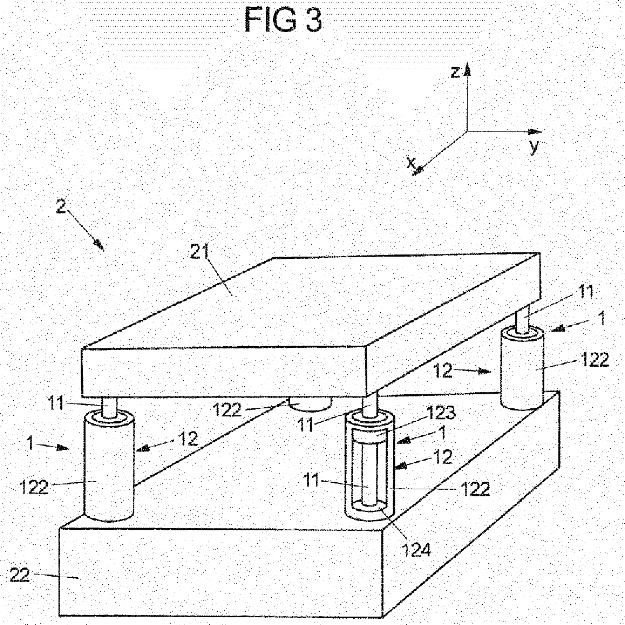

Fig. 3 zeigt schematisch und beispielhaft eine Präzisionsvorrichtung 2 in einer Aufhängung für eine Optik oder einer Präzisionsarbeitsfläche, mit einer Platte 21 und einem quaderförmigen Sockel 22, wobei die Platte 21 gegenüber dem Sockel 22 eine möglich kleine thermische Drift aufweisen soll. Die Platte 2 und der Sockel 22 haben jeweils eine quaderförmige Grundform, wobei sich eine Oberfläche der Platte 21 und des Sockels 22 jeweils in einer horizontalen Ebene X-Y erstreckt.

Auf der Oberfläche des Sockels 22 ist in jeder der vier Ecken ein Stützglied 1 der vorstehend mit Bezug die Fig.lA-C beschriebenen Art angeordnet. Die Platte 24 liegt dabei auf den jeweiligen Enden der vertikalen Stützelemente 11 auf, die sich jeweils entlang der gemeinsamen vertikalen Haupterstreckungsrichtung Z aus einem jeweiligen Horizontalstützelement 12 hinaus erstrecken.

### Bezugszeichenliste

- 1: Stützglied
- 11: Vertikalstützelement
- 12: Horizontalstützelement
- 122: Mantelabschnitt
- 123: Lagerabschnitt
- 124: Bodenabschnitt
- 2: Präzisionsvorrichtung
- 20: Stützgerüst
- 201: Zentralteil
- 202: Verbindungselement
- 204: Stützzylinder
- 21: Platte
- 22: Sockel
- R: Innenraum
- Z: Haupterstreckungsrichtung

## Patentansprüche

1. Stützglied (1) für eine Präzisionsvorrichtung (2), umfassend
- ein Vertikalstützelement (11), das sich entlang einer vertikalen Haupterstreckungsrichtung (Z) erstreckt, wobei das Vertikalstützelement (11) ein Material mit geringem Wärmeausdehnungskoeffizienten umfasst;
**gekennzeichnet durch**
- ein Horizontalstützelement (12), das wenigstens einen Abschnitt des Vertikalstützelements (11) horizontal umgibt und das ausgebildet ist, das Vertikalstützelement (11) horizontal gegen ein Verkippen aus der Haupterstreckungsrichtung (Z) abzustützen, wobei das Horizontalstützelement (12) einen thermisch isolierenden Innenraum (R) begrenzt, in dem das Vertikalstützelement (11) teilweise aufgenommen ist.

2. Stützglied (1) nach Anspruch 1, **dadurch gekennzeichnet, dass** der Innenraum (R) fluiddicht, insbesondere luftdicht, abgeschlossen ist.

3. Stützglied (1) nach einem der vorangehenden Ansprüche, **dadurch gekennzeichnet, dass** sich in dem Innenraum (R) ein Vakuum befindet.

4. Stützglied (1) nach einem der vorangehenden Ansprüche, **dadurch gekennzeichnet, dass** ein linearer Wärmeausdehnungskoeffizient des Vertikalstützelements (11) um wenigstens einen Faktor 2 kleiner als ein linearer WAK des Horizontalstützelements (12) ist.

5. Stützglied (1) nach einem der vorangehenden Ansprüche, **dadurch gekennzeichnet, dass** das Material mit geringem Wärmeausdehnungskoeffizient eine Eisen-Nickel-Legierung, insbesondere eine Invar-Legierung, umfasst.

6. Stützglied (1) nach einem der vorangehenden Ansprüche, **dadurch gekennzeichnet, dass** das Horizontalstützelement (12) Stahl und/oder Aluminium umfasst.

7. Stützglied (1) nach einem der vorangehenden Ansprüche, **dadurch gekennzeichnet, dass** das Horizontalstützelement (12) achsensymmetrisch bezüglich der Haupterstreckungsrichtung (Z) ausgebildet ist.

8. Stützglied (1) nach einem der vorangehenden Ansprüche, **dadurch gekennzeichnet, dass** das Horizontalstützelement (12) zylinderförmig, insbesondere kreiszylinderförmig, oder in einem horizontalen Querschnitt viereckig ausgebildet ist.

9. Stützglied (1) nach einem der vorangehenden Ansprüche, **dadurch gekennzeichnet, dass** das Horizontalstützelement (12) einen Lagerabschnitt (123) zum horizontalen Abstützen des Vertikalstützelements (11) umfasst.

10. Stützglied (1) nach Anspruch 9, **dadurch gekennzeichnet, dass** der Lagerabschnitt (123) ein Luftlager für das Vertikalstützelement (11) bereitstellt.

11. Stützglied (1) nach Anspruch 9, **dadurch gekennzeichnet, dass** der Lagerabschnitt (123) ein fluiddichtes Lager für das Vertikalstützelement (11) bereitstellt.

12. Stützglied (1) nach einem der Ansprüche 9 bis 11, **dadurch gekennzeichnet, dass** zwischen dem Vertikalstützelement (11) und dem Horizontalstützelement (12) eine Blattfeder, insbesondere eine Ring-Blattfeder, angeordnet ist.

13. Stützglied (1) nach einem der vorangehenden Ansprüche, **gekennzeichnet durch** einen Anschluss für ein Temperaturregelungssystem zum Regeln einer Temperatur in dem Innenraum (R).

14. Stützgerüst (20) für eine Präzisionsvorrichtung (2), **gekennzeichnet durch** mehrere miteinander verbundener Stützglieder (1), die jeweils gemäß einem der Ansprüche 1 bis 13 ausgebildet sind, wobei die Vertikalstützelemente (11) der mehreren Stützglieder (1) unterschiedliche Haupterstreckungsrichtungen (Z, Z', Z") im Raum haben.

15. Präzisionsvorrichtung (2) in Form einer optischen Aufhängung, eines metrologischen Rahmens und/oder einer Präzisionsarbeitsfläche, **dadurch gekennzeichnet, dass** die Präzisionsvorrichtung (2) wenigstens ein Stützglied (1) nach einem der Ansprüche 1 bis 13 oder ein Stützgerüst (20) nach Anspruch 14 umfasst.
